# FASCICULE DE BREVET EUROPEEN

(11) **EP 0 826 120 B1**
(45) Date de publication et mention de la délivrance du brevet: **08.12.1999**
(21) Numéro de dépôt: 96910066.8
(22) Date de dépôt: 28.03.1996
(51) Int. Cl.: F16K 11/02, F16K 7/16, F16K 31/524

(54) **DISPOSITIF POUR LA DISTRIBUTION D'UN FLUIDE COMPRENANT AU MOINS UN MOTEUR COMMANDE A DISTANCE, NOTAMMENT UN MITIGEUR D'EAU**
VORRICHTUNG ZUM VERTEILEN EINER FLÜSSIGKEIT, MIT EINEM FERNGESTEUERTEN MOTOR, INSBESONDERE EINE WASSERMISCHVORRICHTUNG
FLUID DISPENSING DEVICE INCLUDING AT LEAST ONE REMOTE-CONTROLLED MOTOR, PARTICULARLY A WATER MIXING VALVE

(30) Priorité: 29.03.1995 FR 9503703
(43) Date de publication de la demande: 04.03.1998
(73) Titulaire: Richard, Jean-Claude René, 61230 Croisilles (FR)
(72) Inventeur: Richard, Jean-Claude René, 61230 Croisilles (FR)
(74) Mandataire: Hammond, William
(86) Numéro de dépôt international: FR9600466
(87) Numéro de publication internationale: WO9630680

(56) Documents cités:
- DE-A- 4 014 849
- DE-C- 809 500
- FR-A- 1 595 039
- FR-A- 2 463 343
- FR-A- 2 586 782
- GB-A- 2 105 809
- US-A- 2 940 474
- US-A- 3 511 266
- US-A- 4 006 753
- US-A- 4 721 133

## Description

Il existe d'innombrables dispositifs destinés à distribuer un fluide à partir d'au moins deux autres. Ce fluide étant la résultante des deux autres, ceux-ci sont appelés "fluides primaires" tandis que le fluide résultant est appelé "fluide secondaire".

Les fluides en cause peuvent être des gaz, des liquides ou des produits assimilables tels que des poudres, farines, granules et autres matières dites "coulantes".

Les mélanges de gaz sont nécessaires dans toutes sortes d'industries qu'il est inutile de citer, et sont parfois indispensables pour les besoins biologiques de l'homme :
- mélanges respiratoires spécifiques à l'immersion de l'homme en milieu hostile : plongée subaquatique, travaux en atmosphère dangereuse, excursions dans l'espace, etc.,
- gaz respiratoire lors d'opérations de sauvetage, de réanimation, de soins intensifs,
- mélanges pour l'anesthésie de patients lors d'interventions chirurgicales.

Les mélanges de liquides sont également très fréquents, notamment pour le dosage en continu de composants distincts.

Le fluide secondaire n'est pas toujours le mélange effectif des fluides primaires, car on peut souhaiter supprimer totalement l'un des fluides primaires et/ou n'utiliser qu'un seul fluide primaire pur, tout en conservant la possibilité de faire varier de manière plus ou moins fine les différentes proportions de mélange.

C'est le cas, en particulier, lorsque le dispositif est un mélangeur, ou mitigeur, d'eau chaude et d'eau froide car l'usager désire souvent de l'eau froide seule ou de l'eau chaude seule, outre les différentes proportions intermédiaires.

Beaucoup de dispositifs existant dans le commerce sont du type à commande manuelle et, en matière de mélangeurs ou de mitigeurs d'eau, le modèle courant le plus élaboré possède une commande graduée en degrés Celsius grâce à laquelle l'usager affiche la température souhaitée qui est maintenue quel que soit le débit de l'eau distribuée.

On a déjà pensé à rendre ces dispositifs plus pratiques, notamment en leur adjoignant des commandes plus ou moins automatiques, ce qui a pour conséquence de remplacer la commande manuelle par une commande mécanique, c'est-à-dire motorisée.

Or, on sait à quel point il est délicat de faire coexister dans un même ensemble mécanique l'énergie électrique et des liquides conducteurs qui, en outre, ont des effets physico-chimiques très négatifs : corrosion, oxydation, entartrage, fuites provoquant des courts circuits, risque d'électrocution de l'usager, etc.

On a donc cherché à perfectionner ces dispositifs en les rendant non seulement plus commodes mais aussi plus sûrs en isolant au maximum l'énergie électrique, tant pour préserver les dispositifs eux-mêmes que pour protéger les usagers.

Pour cela, on a déjà pensé à commander les dispositifs à distance, afin de supprimer tout contact physique entre ces dispositifs et les usagers, surtout lorsqu'un tel dispositif est appliqué aux installations sanitaires : cabines de douches et baignoires, car l'usager se trouve alors dans des conditions de danger très graves, du fait que le corps mouillé est hautement conducteur et qu'une électrocution dans ces conditions peut entraîner la mort.

Pour situer l'état de la technique connue, on peut citer les documents suivants :
- FR-A-2.586.782 qui décrit un mitigeur ayant un organe de réglage motorisé qui est relié directement à une pièce qui contrôle le débit d'eau, ce qui suppose plusieurs passages étanches entre une partie du mitigeur dans laquelle circule l'eau et une partie du mitigeur à laquelle aboutissent des conducteurs électriques.
- FR-A-2.463.343 du même type que le précédent, à savoir qu'un passage devant être rendu étanche parmet à un organe de transmission mécanique de passer d'une partie contenant de l'eau à une partie alimentée électriquement.
- DE-A-4.014.849 qui décrit un évier muni d'électrovannes contrôlant l'arrivée d'eau et la vidange de l'évier au moyen de plusieurs moteurs commandés à partir de touches disposées au bord de l'évier. Par nature même, les électrovannes sont des mécanismes qui ouvrent et ferment un passage de liquide au moyen d'un moteur alimenté en énergie électrique.
- US-A-4 006 753 (qui constitue la base pour le préambule de la revendication 1) dont l'objet est un distributeur de fluide ayant plusieurs obturateurs et une seule came ayant plusieurs surfaces d'appui discontinues, de sorte qu'aucune position intermédiaire des obturateurs n'est possible. Il ne s'agit donc pas d'un dispositif mélangeur de fluides mais d'un simple tiroir distributeur agissant par tout ou rien sur chaque obturateur.
- US-A-4 721 133 qui concerne un ensemble de vannes commandées manuellement et indépendamment les unes des autres. Les obturateurs sont commandées chacun par une came rigoureusement circulaire et présentant une seule encoche, ce qui signifie que les obturateurs n'ont que deux positions, d'ouverture ou de fermeture puisque pendant tout le pivotement de la came sur 360° moins quelques degrés, la position de l'obturateur reste inchangée (position de fermeture). Sur les quelques degrés de l'encoche, l'obturateur est en position d'ouverture et l'on ne peut revenir à la position de fermeture qu'en faisant pivoter la came dans le sens inverse du précédent.
- US-A-2 940 474 qui décrit un dispositif très proche de celui du précédent document, à savoir que les cames de commande des obturateurs ne donnent à ceux-ci que deux position stables : ouverture ou fermeture. Ici, cependant, les cames sont excentrées dans le seul but d'imprimer aux obturateurs un mouvement progressif pour passer d'une position extrême à une autre. Il ne s'agit évidemment pas d'un mélangeur mais d'une simple vanne raccordée à une conduite d'entrée et une conduite de sortie.
- DE-C-809 500 qui décrit une vanne ayant des conduites et des poussoirs pivotants en forme de came ayant deux parties, une circulaire et l'autre rectiligne, ne donnant que deux possibilités : ouverture ou fermeture alternative de deux conduites, l'une d'entrée et l'autre de sortie. Il s'agit d'un distributeur simple et non d'un mélangeur multipositions.
- FR-A-1 595 039 qui décrit une soupape ayant un obturateur et une came de commande dont la surface d'appui n'est en contact avec l'obturateur que sur une fraction de sa longueur.

La présente invention s'écarte de ces solutions et permet une commande à distance, sans aucun contact entre l'usager et le dispositif, les cames ayant une surface d'appui continuement variable, afin d'obtenir des positions intermédiaires stables entre les deux positions extrêmes d'ouverture et de fermeture.

A cette fin, l'invention a pour objet un dispositif selon la revendication 1.

Selon d'autres caractéristiques de l'invention :
- chaque élément mobile est constitué par un piston qui est engagé dans un cylindre de guidage et qui est placé en regard d'une came calée sur un arbre relié cinématiquement au moteur;
- le piston est formé de deux parties coaxiales superposées avec interposition d'un ressort;
- l'une des deux parties du piston possède un prolongement longitudinal engagé à coulissement libre dans un logement de formes et dimensions coordonnées ménagé dans l'autre partie;
- un roulement à billes est monté pivotant et engagé en partie dans une encoche demi-circulaire du piston, afin d'être interposé entre ledit piston et la came correspondante;
- l'arbre relié cinématiquement au moteur porte au moins un roulement à billes de guidage en pivotement;
- le dispositif comprend un microprocesseur relié d'une part à un circuit électrique d'alimentation et de commande des moyens moteurs et, d'autre part à des organes de contrôle du fonctionnement de l'ensemble;
- les organes de contrôle du fonctionnement de l'ensemble comprennent au moins un capteur de position des organes de contrôle du débit des fluides primaires;
- les organes de contrôle comprennent au moins un capteur d'une caractéristique physique du fluide secondaire, telle que la température;
- le microprocesseur comprend au moins un récepteur de signaux de commande émis par des moyens de commande à distance.
- les moyens de commande à distance comprennent au moins un capteur de rayonnement infra-rouge;
- le dispositif nécessitant une alimentation en énergie électrique, celle-ci est fournie, au moins en partie, par une turbine intercalée sur la conduite de sortie et associée à un générateur de courant continu connecté à une liaison aboutissant à une batterie d'accumulateur.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en coupe d'un exemple de réalisation d'un dispositif conforme à l'invention, conçu pour deux fluides primaires et un fluide secondaire et représenté dans la situation où l'une des deux arrivées est entièrement obturée et l'autre entièrement libre.

La figure 2 est une vue schématique en coupe faite selon la ligne II-II de la figure 1.

La figure 3 est une vue schématique en coupe d'un exemple de réalisation d'un dispositif conforme à l'invention, conçu pour deux fluides primaires et un fluide secondaire et représenté dans la situation où les deux arrivées sont partiellement ouvertes.

La figure 4 est une vue schématique en coupe faite selon la ligne IV-IV de la figure 3.

La figure 5 est une vue schématique en coupe d'un exemple de réalisation d'un dispositif conforme à l'invention, conçu pour deux fluides primaires et un fluide secondaire et représenté dans la situation où l'autre arrivée est entièrement obturée et la première entièrement libre.

La figure 6 est une vue schématique en coupe faite selon la ligne VI-VI de la figure 5.

La figure 7 est un schéma illustrant un exemple des moyens de commande et de régulation du dispositif des figures 1 à 6.

La figure 8 est une vue schématique montrant la forme générale de cames destinées à agir sur des organes de contrôle du débit de fluides.

La figure 9 est un diagramme illustrant les cycles de fonctionnement des cames de la figure 8.

La figure 10 est un schéma illustrant un mode de réalisation de l'invention selon lequel le dispositif est autonome, l'énergie électrique nécessaire au fonctionnement du moteur est fournie par une turbine mue par le courant de sortie du fluide secondaire.

La figure 11 est une vue schématique montrant la turbine de la figure 10 et son schéma électrique associé.

En se reportant au dessin, on voit que le dispositif représenté est appliqué à la réalisation d'un mitigeur (ou "mélangeur") recevant de l'eau froide (premier "liquide primaire") et de l'eau chaude (second "liquide primaire"), pour délivrer, à la demande, soit de l'eau froide seule, soit de l'eau chaude seule, soit un mélange des deux ("liquide secondaire").

Le dispositif comprend un corps sensiblement parallélépipédique 1 divisé en deux parties superposées 100 et 200 séparées l'une de l'autre par une paroi souple étanche 300, constituée par une membrane élastique maitenue à sa périphérie par des brides 101 et 201 de tout type connu.

La partie inférieure 200 présente un creux 202 dans lequel débouchent trois passages 203, 204 et 205 prolongés par trois embouts tubulaires 206, 207 et 208.

Les passages 203 et 204 sont munis d'un siège convexe respectivement 210 et 211 et les embouts correspondants 206 et 207 reçoivent des conduites dites "d'entrée" 212 et 213 raccordées l'une à une source d'eau froide et l'autre à une source d'eau chaude.

Le passage 205 reste libre et son embout 208 reçoit une conduite dite "de sortie" 214.

En regard des sièges 210 et 211, mais au-delà de la membrane 300, c'est-à-dire dans la partie 100, se trouvent des pistons formés chacun de deux parties superposées respectivement 102-103 et 104-405 entre lesquelles se trouvent des ressorts 106 et 107.

Les ressorts 106 et 107 constituent un limiteur d'effort et sollicitent en permanence, à l'écartement, les parties 102 et 103 d'une part, 104 et 105 d'autre part mais, quelle que soit la distance qui sépare ces deux parties de chaque piston, elles sont toujours maintenues alignées grâce à un prolongement cylindrique 108-109 des parties supérieures 102 et 104, engagé à coulissement dans un logement ménagé sur le dessus des parties inférieures 103 et 105.

Chacune des parties supérieures 102 et 104 présente une rainure hémisphérique dans laquelle un roulement à billes 110-111 est monté roulant selon son axe.

La partie 100 du corps 1 est traversée d'un alésage 112 dans lequel se trouvent trois paliers à roulements à billes 113, 114 et 115 pour un arbre 116 relié cinématiquement à l'arbre de sortie d'un moteur électrique 117, par l'intermédiaire d'un coupleur de type connu 118.

Les roulements à billes 110 et 111 des pistons s'étendent radialement dans l'alésage 112 et sont au contact de deux cames 121 et 122 calées sur l'arbre 116.

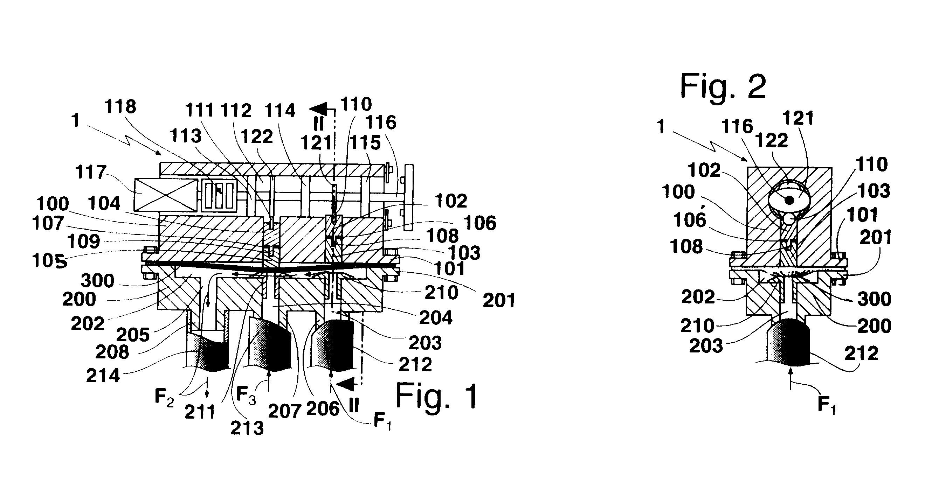

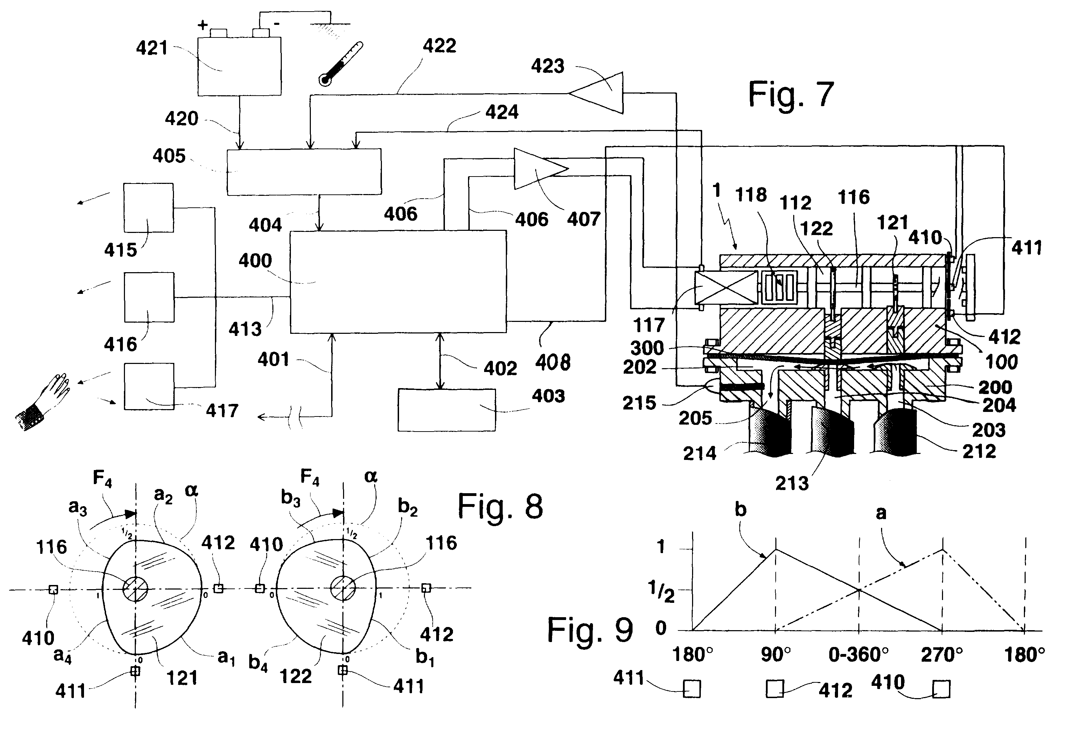

Sur les figures 2, 4 et 6 on a représenté schématiquement les cames 121 et 122 sous forme de deux ovales décalés mais, en réalité, la forme des cames est plus complexe et sera décrite plus loin en regard des figures 8 et 9.

Le fonctionnement du dispositif qui vient d'être décrit est le suivant :

On suppose que la situation de départ est celle qui correspond au repos, c'est-à-dire que le dispositif ne délivre pas d'eau du tout : le moteur 117 a été mis en marche et arrêté dans une position telle que les cames 121 et 122 sont immobiles et appuient sur les roulements à billes 110 et 111, lesquels appuient sur les parties supérieures 102 et 104 des pistons, les ressorts 106 et 107 sont plus ou moins comprimés selon l'effort auquel ils sont soumis, les parties inférieures 103 et 105 des pistons maintiennent la membrane 300 en appui contre les sièges 210 et 211, de sorte que les passages centraux de ces sièges 210 et 211 sont obturés de manière étanche puisque la membrane 300 est élastique.

Il n'entre donc dans la chambre de mélange 202 ni eau froide, ni eau chaude.

Si l'usager désire de l'eau froide seulement, il doit mettre en route le moteur 117 pour faire tourner les cames 121 et 122 dont les formes, qui seront explicitées plus loin, font que le siège 211 reste obturé par la membrane 300 maintenue appuyée par le piston 104-105 et la came 122, tandis que le siège 210 est dégagé du fait que la came 121 a laissé remonter le piston 102-103, poussé par le retour élastique de la membrane 300 et la pression d'eau froide arrivant par la conduite d'entrée 212 selon la flèche F1.

L'eau froide arrive dans la chambre de mélange 202 sous la membrane 300, contourne le siège 211 fermé et atteint la conduite de sortie 214 par laquelle elle est évacuée selon la flèche F2.

Le débit d'eau froide selon les flèches F2 est réglé par la came 121 qui laisse remonter la membrane 300 plus ou moins haut au-dessus du siège 210 pour ménager une section de passage plus ou moins grande.

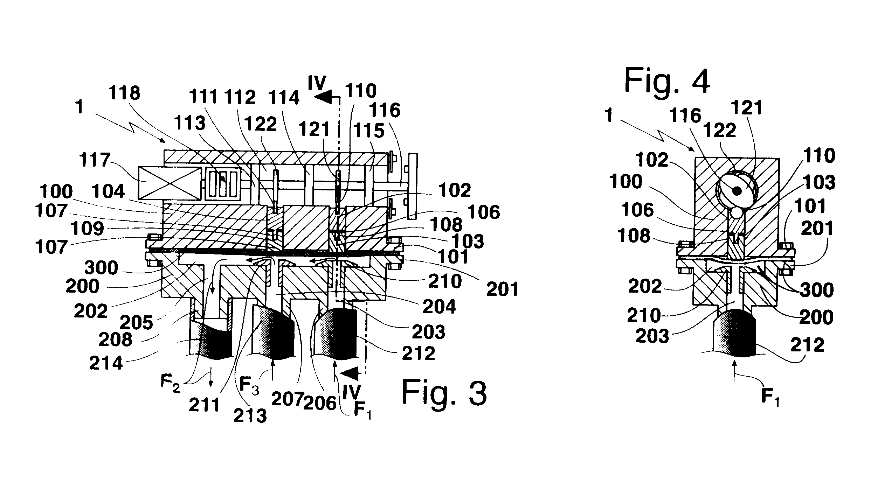

Si l'usager désire de l'eau tiède, c'est-à-dire un mélange d'eau froide et d'eau chaude, il doit mettre en route le moteur 117 pour faire tourner les cames 121 et 122 jusqu'à leur position angulaire correspondant à l'ouverture simultanée des sièges 210 et 211 (figure 3) par soulèvement plus ou moins marqué des pistons 102-103 et 104-105.

Le débit de sortie d'eau chaude est réglé par la came 122 qui laisse remonter la membrane 300 plus ou moins haut au-dessus du siège 211 pour ménager une section de passage plus ou moins grande.

Bien entendu, il est possible de régler la section de passage de l'eau froide indépendamment de celle de l'eau chaude, afin d'obtenir un débit de sortie global plus ou moins important et une proportion eau froide - eau chaude correspondant à la température désirée, comme cela sera explicité plus loin.

L'eau froide arrive dans la chambre de mélange 202 selon la flèche F1, comme dit plus haut, où elle rencontre l'eau chaude arrivant dans la chambre de mélange 202 par la conduite d'arrivée 213 selon la flèche F3 et le siège 211, le mélange atteint la conduite de sortie 214 par laquelle il est évacué selon la flèche F2.

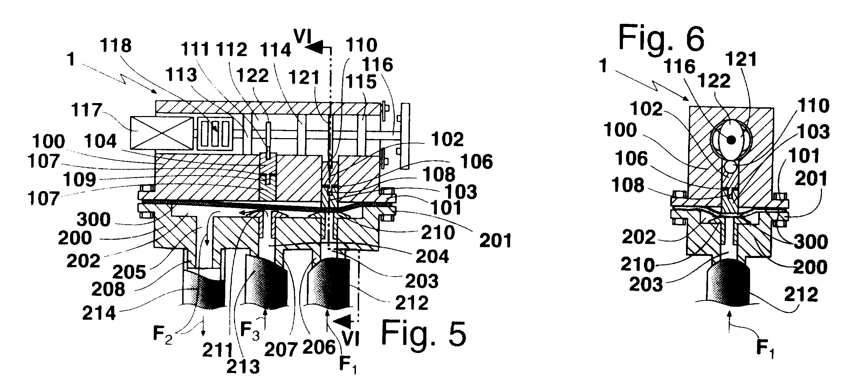

Si l'usager désire de l'eau chaude seulement, il doit commander la rotation du moteur 117 pour faire tourner les cames 121 et 122 afin que le siège 210 soit obturé et le siège 211 ouvert, position qui est représentée sur les figures 5 et 6.

La mise en route du moteur 117 et son arrêt coordonné à la position des cames 121 et 122 doivent être obtenus de manière simple et pratique afin d'éviter les tatonnements et les erreurs de manipulation.

Sur la figure 7 on a représenté un exemple de circuit permettant de contrôler automatiquement les différentes fonctions du dipositif et, en outre, de mettre à la disposition de l'usager un système de commande à distance lui évitant tout contact avec le dispositif.

Le circuit comprend un microprocesseur 400 qui reçoit des informations et envoie des signaux de commande. A cet effet, il reçoit :
- une liaison série 401 avec un ordinateur (non représenté) par lequel le microprocesseur 400 est programmé,
- une liaison 402 d'une mémoire 403 dans laquelle sont stockées les données du programme dont le paramétrage est ainsi sauvegardé (programme re-paramétrable ou pas selon les applications),
- une liaison 404 avec un convertisseur analogique/numérique 405 par lequel parviennent des informations qui seront décrites plus loin,
- une double liaison 406 avec les entrées d'un amplificateur fonctionnel 407 réglant les mouvements du moteurs 117 et du coupleur 118,
- une liaison 408 avec trois capteurs à effet Hall 410, 411 et 412 déterminant les positions angulaires significatives des cames 121 et 122,
- une liaison 413 avec des capteurs de rayonnement infrarouge 415, 416 et 417.

Au convertisseur analogique/numérique 405 aboutissent trois liaisons : une liaison 420 avec une batterie 421, une liaison 422 avec une sonde thermique 215 placée au voisinage de la conduite de sortie 205, via un amplificateur 423, et une liaison 424 avec un tachymètre (non représenté) mesurant en permanence la vitesse du moteur 117.

Les capteurs 415, 416 et 417 sont du type, connu en soi, émetteur-récepteur de rayonnement infra-rouge et leur commande s'effectue par simple approche d'une main (comme représenté) ou même d'un doigt.

Dans la pratique, cette action de l'usager peut, bien entendu, être obtenue par d'autres moyens à la portée de l'homme de métier.

Les capteurs de rayonnement infrarouge sont dédiés chacun à une fonction :
- le capteur 415 a pour seule fonction de fournir au microprocesseur 400 les signaux correspondant à la mise en marche ou à l'arrêt du dispositif,
- le capteur 416 a pour fonction de fournir au microprocesseur 400 les signaux correspondant à l'ouverture plus ou moins grande du siège 211, c'est-à-dire à l'arrivée d'eau chaude dans la chambre de mélange 202,
- le capteur 417 a pour fonction de fournir au microprocesseur 400 les signaux correspondant à l'ouverture plus ou moins grande du siège 210, c'est-à-dire à l'arrivée d'eau froide dans la chambre de mélange 202.

La régulation du débit dans la conduite de sortie 205 et de la proportion eau chaude-eau froide sont obtenues par le jeu des cames 121 et 122.

On voit sur la figure 8 que les deux cames 121 et 122 ont des formes coordonnées pour obtenir toutes les combinaisons de températures possibles entre celle de l'eau froide seule et celle de l'eau chaude seule.

Ces cames 121 et 122 sont positionnées en supposant qu'elles agissent sur le roulement à billes correspondant 110-111 par leur partie inférieure (ou "sud") située à 180° par rapport à leur partie supérieure (ou "nord") situé à 0-360°, les extrémités droite et gauche du diamètre horizontal étant respectivement à 90° ("est") et à 270° ("ouest").

En observant la came 121, on voit que par rapport au cercle circonscrit α, elle présente un arc de cercle a1 dans le quart de cercle sud-est compris entre 90° et 180°, ce qui signifie qu'un premier pivotement d'un quart de tour de l'arbre 116 dans le sens de la flèche F4 aménera le point "est" de la came 121 au "sud", là où s'exerce l'action de la came sur le piston 102-103, et n'aura aucun effet sur la position dudit piston 102-103 qui sera donc maintenu dans sa position basse de fermeture du siège 210, ce que l'on symbolise par le chiffre "0", signifiant que le débit d'eau froide est nul.

En observant la came 122, on voit que dans le même quart de cercle "sud-est", elle présente une courbe b1 qui s'étend depuis l'extrémité du rayon du cercle circonscrit α jusqu'à une distance égale à la moitié du rayon de ce cercle α, ce qui signifie que le même premier pivotement d'un quart de tour de l'arbre 116 dans le sens de la flèche F4 aménera le point "est" de la came 122 au "sud", là où s'exerce l'action de la came 122 sur le piston 104-105, et aura pour effet de permettre au piston 104-105 de se soulever selon une hauteur égale au demi-rayon du cercle α, position dans laquelle la membrane 300 est complètement relevée, le siège 211 complètement ouvert, le débit d'eau chaude maximum. Cette ouverture complète est symbolisée par "1".

En conséquence, ce premier pivotement d'un quart de tour de l'arbre 116 à partir de la situation des cames 121 et 122 de la figure 8, maintient le siège 210 fermé et provoque l'ouverture complète du siège 211.

Il sort donc par la conduite 214 de l'eau à la température de l'eau chaude fournie à la conduite d'entrée 213 (moins les déperditions), l'arrivée d'eau froide étant totalement interrompue.

L'arc de cercle a1 se prolonge par une courbe a2 qui s'étend depuis l'extrémité du rayon du cercle circonscrit α jusqu'à une distance égale au quart de ce rayon mesuré à partir de la circonférence du cercle α, ce qui signifie qu'un deuxième pivotement d'un autre quart de tour de l'arbre 116 amène le point "nord" de la came 121 au "sud", ce qui permet au piston 102-103 de se soulever partiellement et à la membrane 300 de dégager le siège 210 selon une section de passage correspondant à une fraction du débit d'eau froide voisine de 50 % du débit total, ce que l'on a symbolisé par "½".

La courbe b1 de la came 122 se prolonge par une courbe b2 qui s'étend depuis la courbe b1 jusqu'à une distance égale au quart du rayon du cercle circonscrit α mesuré à partir de la circonférence de ce cercle α, ce qui signifie que ce deuxième pivotement d'un quart de cercle, qui a amené le point "nord" de la came 121 au "sud", amène également le point "nord" de la came 122 au "sud".

On oblige ainsi le piston 104-105 à s'abaisser pour obliger la membrane 300 à réduire de moitié la section de passage de l'eau chaude.

La courbe a2 de la came 121 se prolonge par une courbe a3 qui s'étend depuis la courbe a2 jusqu'à une distance égale à la moitié du rayon du cercle circonscrit α, ce qui signifie qu'un troisième pivotement de l'arbre 116 dans le sens de la flèche F4 amène le point "ouest" de la came 121 au "sud", ce qui permet au piston 102-103 de se soulever encore et de faire passer, ainsi, le siège 210 d'une position de demi-ouverture symbolisée par "½", à une position, d'ouverture complète symbolisée par "1".

La courbe b2 de la came 122 se prolonge par une courbe b3 qui s'étend depuis la courbe b2 jusqu'au cercle circonscrit α, ce qui signifie que le troisième pivotement de l'arbre 116 dans le sens de la flèche F4 amène le point "ouest" de la came 122 au "sud", ce qui oblige le piston 104-105 à s'abaisser encore pour passer d'une position de demi-ouverture symbolisée par ½, à une position de fermeture complète symbolisée par "0".

Enfin, la courbe a3 de la came 121 se prolonge par une courbe a4 jusqu'au qui s'étend depuis la courbe a3 jusqu'au cercle circonscrit α, ce qui signifie qu'un quatrième pivotement de l'arbre 116 dans le sens de la flèche F4 ramène le point "sud" de la came 121 au "sud" de départ, après un tour complet, ce qui oblige le piston 102-103 à s'abaisser et fait passer, ainsi, le siège 211 d'une position d'ouverture complète symbolisée par "1" à sa position de fermeture complète symbolisée par "0", point de départ de l'arc de cercle a1 et début du cycle que l'on vient de décrire.

La courbe b3 de la came 122 se prolonge par un arc de cercle b4 qui s'étend depuis la courbe b3 jusqu'au début de la courbe b1, ce qui signifie que le quatrième pivotement de l'arbre 116 dans le sens de la flèche F4 ramène le point "sud" de la came 122 au "sud" de départ, après un tour complet, ce qui n'aura aucun effet sur la position du piston 104-105 qui sera donc maintenu dans sa position basse de fermeture du siège 211, symbolisé par le chiffre "0", signifiant que le débit d'eau chaude est nul.

L'arbre 116, entraîné par le moteur 117 et le coupleur 118, fait pivoter les deux cames 121 et 122 à la fois et l'on voit que les deux cycles sont différents et coordonnés, comme cela est schématisé sur la figure 9.

En ordonnée, on porte l'amplitude du battement permis par les cames mesurée de 0 à 1, battement qui correspond à l'amplitude des mouvements des pistons 102-103 et 104-105 et à l'état d'ouverture plus ou moins prononcée des sièges 210 et 211.

En abscisse, on porte le développé de la périphérie de la surface active des cames 121 et 122.

La ligne a correspond à la came 121 et l'on voit qu'à partir de l'origine (qui correspond au "sud", ou 180°) et sur un arc de 90° (soit un quart de tour), la came 121 maintient le piston 102-103 en position basse dans laquelle le siège 210 est obturé.

Pendant le même quart de tour, la ligne b qui correspond à la came 122 montre que le piston 104-105 s'élève et fait passer le siège 211 de sa position de fermeture complète à sa position d'ouverture totale.

Ce mouvement d'un quart de tour a donc pour effet de faire couler de l'eau chaude seulement et, cela, à son débit maximum.

En supposant que l'arbre 116 continue de tourner, le siège 210 s'ouvre pendant un demi-tour tandis que le siège 211 se ferme. Au croisement des lignes a et b, après un quart de tour, les deux sièges 210 et 211 sont dans la même situation de demi-ouverture.

Ce mouvement d'un demi-tour a donc pour effet de faire couler un mélange d'eau d'abord très chaude puis de plus en plus froide jusqu'à fermeture totale de l'eau chaude.

Si l'arbre 116 tourne sur le dernier quart d'un tour, l'eau chaude reste supprimée et le débit d'eau froide diminue jusqu'à l'arrêt total, ce qui était bien la situation de départ.

Les capteurs 410, 411 et 412 informent le microprocesseur des positions caractéristiques des cames ayant pour effet :
- la fermeture totale des arrivées d'eau chaude et froide pour le capteur 411,
- la fermeture complète de l'eau froide et l'ouverture complète de l'eau chaude pour le capteur 412,
- la fermeture complète de l'eau chaude et l'ouverture complète de l'eau froide pour le capteur 410.

Naturellement, il est possible de maintenir à l'arrêt les deux cames 121 et 122 dans n'importe quelle position intermédiaire entre les positions cardinales indiquées.

De même, le microprocesseur 400 peut commander la rotation du moteur 117 (et donc de l'arbre 116 et des cames 121 et 122) aussi bien dans un sens que dans l'autre, le programme prévoyant une optimisation des mouvements pour passer d'un situation à une autre.

Il n'en reste pas moins que la surface d'appui des cames 121 et 122 sur les roulements à billes 110 et 111 est continue, c'est-à-dire qu'elle ne présente aucune solution de continuité, de sorte que hormis le légitime souci d'optimisation des mouvements, le sens de rotation de l'arbre 116 et des cammes 121 et 122 qu'il porte pourrait être unique.

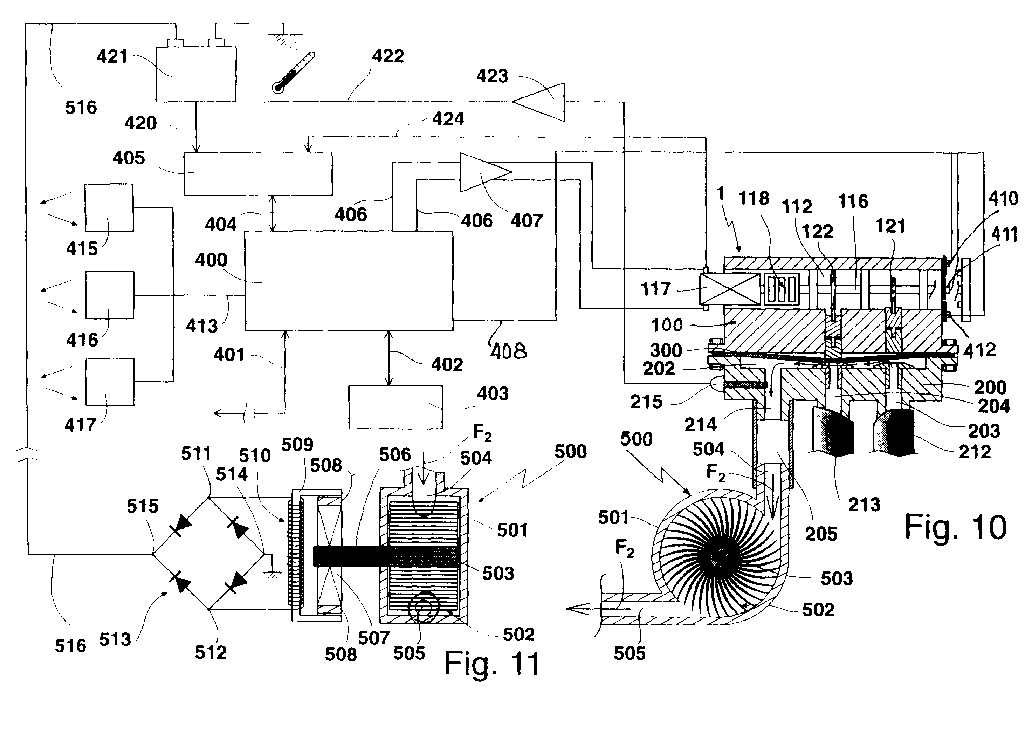

En se reportant maintenant aux figures 10 et 11, on voit un mode de réalisation de l'invention selon lequel le dispositif a une entière autonomie de fonctionnement, du fait que l'énergie électrique dont il a besoin (principalement pour le fonctionnement du moteur 117) est récupérée sur celle qui est fournie par la mise en circulation des fluides primaires, c'est-à-dire ici par la mise sous pression de l'eau froide et de l'eau chaude.

Sur la conduite de sortie 205 est placée une turbine 500 formée d'un stator 501 et d'un rotor 502 monté sur un arbre rotatif 503 dont l'axe est perpendiculaire à celui de ladite conduite de sortie 205, c'est-à-dire au sens d'écoulement du fluide secondaire matérialisé par la flèche F2.

A la sortie du corps 1, l'eau qui emprunte la conduite de sortie 205 selon la flèche F2 pénètre donc dans le stator 501 par une entrée 504, entraîne le rotor 502 en rotation et quitte le stator 501 par une sortie 505 vers l'utilisation.

L'arbre 503 a une extension 506 hors du stator 501 sur laquelle est calé un volant 507 dont la périphérie est munie de plusieurs aimants permanants 508 et qui est entouré par une armature conductrice 509 associée à un ou plusieurs enroulements 510.

Les extrémités 511 et 512 de l'enroulement 510 sont raccordées à un pont de diodes 513 dont une sortie 514 est mise à la masse tandis que l'autre 515 reçoit une liaison 516 raccordée à la batterie d'accumulateur 421.

Le fonctionnement de ce mode de réalisation est le suivant :

Chaque fois que l'usager utilise le dipositif, de l'eau passe par la conduite de sortie 205 et entraîne le rotor 502 de la turbine 500, lequel entraîne le volant 507 et ses aimants 508.

Comme cela est bien connu, on recueille aux extrémités 511 et 512 un courant électrique alternatif que le pont de diodes 513 redresse, de sorte que la liaison 516 est parcourue par un courant continu apte à charger la batterie 421.

Ainsi, l'installation tout entière est autonome puisque l'énergie électrique dont elle a besoin lui est fournie, à partir de la batterie 421, par la turbine 500, elle-même entraînée par l'eau utilisée.

Naturellement, tout autre mode d'alimentation électrique est utilisable, notamment en basse tension, à partir de piles ou par transformation du courant électrique de 220 Volts généralement disponible sur le secteur en courant de 6, 9 ou 12 Volts, par exemple.

Le dispositif décrit comporte un seul arbre 116 et deux cames 121 et 122 mais l'invention permet de réaliser des appareils à au moins deux arbres, afin de disposer de cames indépendantes.

Cela pourrait être le cas lorsque l'on veut contrôler le débit de sortie du fluide secondaire ou lorsque les caractéristiques des fluides primaires l'exigent.

Pour chaque arbre, on doit prévoir un moyen de commande individuel qui peut être soit un moteur, soit un mécanisme de couplage susceptible d'embrayer et de débrayer l'arbre correspondant par rapport à un moteur commun.

## Revendications

1. Dispositif pour la distribution d'un fluide dit "secondaire" pouvant résulter du mélange d'au moins deux fluides dits "primaires", du type comprenant un corps en deux parties séparées par une paroi souple étanche (300) d'un côté de laquelle sont raccordées des conduites dites "d'entrée" (203,204), chacune pour l'un des fluides primaires et une conduite dite "de sortie" (205) pour le fluide secondaire, lesdites conduites (203,204,205) communiquant toutes entre elles par une chambre de mélange (202) et lesdites conduites d'entrée (203,204) possédant chacune un organe de contrôle du débit (210,211) du fluide qu'elles contiennent, situé de l'autre côté de la paroi souple étanche (300), commandé par des moyens moteurs et comprenant des cames individuelles, chaque organe de contrôle comprenant, outre la paroi souple étanche (300), d'une part, un élément individuellement mobile (102-103 et 104-105) situé d'un côté de ladite paroi souple étanche (300) à l'aplomb des extrémités de chacune des conduites d'entrée (203 et 204) situées de l'autre côté de ladite paroi souple étanche (300), et d'autre part autant de cames individuelles (121, 122) qu'il y a d'éléments mobiles (102-103 et 104-105), lesdites cames étant reliées cinématiquement à des moyens moteurs (116-117-118), qui sont toujours au contact des éléments mobiles (102-103 et 104-105) soit directement, soit par l'intermédiaire d'éléments interposés (110, 111), et étant cinématiquement liées l'une à l'autre afin qu'à tout mouvement imprimé à l'une (121, 122) par les moyens moteurs (116-117-118) corresponde un mouvement simultané de l'autre (122, 121), caractérisé par le fait que lesdites cames individuelles (121, 122) sont calées sur un arbre commun, et présentent une surface d'appui qui est continue et dont la distance mesurée à partir de la circonférence du cercle circonscrit varie continûment sur au moins une partie de la circonférence de la came de façon à obtenir des positions intermédiaires stables entre les deux positions extrêmes d'ouverture complète. et de fermeture desdits organes de contrôle de débit .

2. Dispositif selon la revendication 1,
caractérisé en ce que chaque élément mobile est constitué par un piston (102-103, 104-105) qui est engagé dans un cylindre de guidage et qui est placé en regard d'une came (121-122) calée sur un arbre (116) relié cinématiquement au moteur (117).

3. Dispositif selon la revendication 2,
caractérisé en ce que le piston est formé de deux parties coaxiales superposées (102 et 103, 104 et 105) avec interposition d'un ressort (106-107).

4. Dispositif selon la revendication 3,
caractérisé en ce que l'une des deux parties (102-104) du piston possède un prolongement longitudinal (108-109) engagé à coulissement libre dans un logement de formes et dimensions coordonnées ménagé dans l'autre partie (103-105).

5. Dispositif selon la revendication 2,
caractérisé en ce qu'un roulement à billes (110-111) est monté pivotant et engagé en partie dans une encoche demi-circulaire du piston (102-104), afin d'être interposé entre ledit piston (102-104) et la came (121-122) correspondante.

6. Dispositif selon la revendication 2,
caractérisé en ce que l'arbre (116) relié cinématiquement au moteur (117) porte au moins un roulement à billes (113-114-115) de guidage en pivotement.

7. Dispositif selon la revendication 1,
caractérisé en ce qu'il comprend un microprocesseur (400) relié d'une part à un circuit électrique (406-407-423-405) d'alimentation et de commande du moteur (117) et, d'autre part à des organes (215, 410-411-412) de contrôle du fonctionnement de l'ensemble.

8. Dispositif selon la revendication 7,
caractérisé en ce que les organes de contrôle du fonctionnement de l'ensemble comprennent au moins un capteur de position (410-411-412) des organes de contrôle du débit des fluides primaires.

9. Dispositif selon la revendication 7,
caractérisé en ce que les organes de contrôle comprennent au moins un capteur (215) d'une caractéristique physique du fluide secondaire, telle que la température.

10. Dispositif selon les revendication 7,
caractérisé en ce que le microprocesseur (400) comprend au moins un récepteur de signaux de commande émis par des moyens de commande à distance.

11. Dispositif selon la revendication 10,
caractérisé en ce que les moyens de commande à distance comprennent au moins un capteur (415-416-417) de rayonnement infra-rouge.

12. Dispositif selon la revendication 1,
caractérisé en ce que nécessitant une alimentation en énergie électrique, celle-ci est fournie, au moins en partie, par une turbine (500) intercalée sur la conduite de sortie (205) et associée à un générateur (506 à 513) de courant continu connecté à une liaison (516) aboutissant à une batterie d'accumulateur (421).

## Patentansprüche

1. Vorrichtung zur Verteilung eines als « sekundär » bezeichneten Strömungsmittels, das aus der Mischung mindestens zweier Strömungsmittel, die als « primär » bezeichnet werden, entstehen kann, welche einen Körper aufweist, der aus zwei durch eine flexible, underchlässige Wandung (300) getrennten Teile zusammengesetzt ist, an deren einer Seite Leitungen angeschlossen sind, die als « Zulauf » (203, 204) jeweils für das primäre Strömungsmittel und als « Auslauf » (205) für das sekundäre Strömungsmittel bezeichnet sind, wobei diese Leitungen (203, 204, 205) sämtlich über eine Mischkammer (202) verbunden sind und die genannten Zulaufleitungen (203, 204) jeweils ein Durchflußsteuerorgan (210, 211) für die darin enthaltene Flüssigkeit besitzen, welches auf der anderen Seite der flexiblen, undurchlässigen Wandung (300) angeordnet ist und durch Antriebsmittel gesteuert wird und individuelle Nocken umfaßt, wobei jedes Steuerorgan einerseits ein individuell bewegliches Element (102-103 und 104-105) umfaßt, das jeweils auf einer der Seiten der genannten Wandung (300) und senkrecht zum Ende jeder der sich auf der anderen Seite dieser Wandung (300) befindlichen Zulaufleitungen (203 und 204) angeordnet ist und andererseits individuelle Nocken (121, 122) aufweist, welche die beweglichen Elemente (102-103 und 104-105) sind, welche Nocken kinematisch durch die Antriebsmittel (116-117-118) verbunden sind, welche ständig entweder unmittelbar oder mittelbar durch zwischengeschaltete Elemente (110, 111) in Berührung mit den beweglichen Elementen (102-103 und 104-105) sind und wobei sie kinematisch derart untereinander verbunden sind, daß jede Bewegung, die auf einen Nocken (121, 122) durch die Antriebsmittel (116-117-118) aufgebracht wird, mit einer gleichzeitigen Bewegung des anderen Nocken (122, 121) korrespondiert, dadurch gekennzeichnet, daß die genannten individuellen Nocken (121, 122) auf einer gemeinsamen Welle fixiert sind und eine durchgehende Oberfläche bilden, deren ab Umfang des Hüllkreises gemessener Abstand auf mindestens einem Teil des Umfangs der Nocke ständig variiert, so daß sich zwischen den beiden äußersten Positionen der wollständigen Öffnung und Schielßung der Durchflußsteuerorgane zwei stetige Zwischenpositionen ergeben.

2. Vorrichtung nach Anspruch 1, dadurch gekennzeichnet,
daß jedes bewegliche Element gebildet ist durch einen Kolben (102-103, 104-105), der in einem Führungszylinder geführt ist und der sich gegenüber einem Nocken (121-122) befindet, der auf einer Welle (116) fixiert ist, die kinematisch mit dem Motor (117) verbunden ist.

3. Vorrichtung nach Anspruch 2, dadurch gekennzeichnet,
daß der Kolben gebildet wird von zwei koaxialen, übereinander angeordneten Teilen (102 und 103, 104 und 105) mit einer dazwischen angeordneten Feder (106-107).

4. Vorrichtung nach Anspruch 3, dadurch gekennzeichnet,
daß eines der beiden Teile (102-104) des Kolbens eine in Längsrichtung sich erstreckende Verlängerung (108-109) besitzt, welche im Eingriff steht mit einer in dem anderen Teil (103-105) vorgesehenen und entsprechende Maße und Gestalt aufweisenden Aufnahme.

5. Vorrichtung nach Anspruch 2, dadurch gekennzeichnet,
daß ein Wälzlager (110-111) drehbar montiert ist und im Eingriff steht mit einer halbkreisförmigen Ausnehmung des Kolbens (102-104), und zwar zur Zwischenlagerung zwischen dem gennanten Kolben (102-104) und den korrespondierenden Nocken (121-122).

6. Vorrichtung nach Anspruch 2, dadurch gekennzeichnet,
daß die kinematisch mit dem Motor (117) verbundene Welle (116) mindestens ein Wälzlager (113-114-115) zur Drehführung aufweist.

7. Vorrichtung nach Anspruch 1, dadurch gekennzeichnet,
daß sie einen Mikroprozessor (400) umfaßt, der einerseits mit einer elektrischen Schaltung (406-407-423-405) zur Speisung und Steuerung des Motors (117) und andererseits mit Funktionskontrollvorrichtungen (215, 410-411-412) der Anordnung verbunden ist.

8. Vorrichtung nach Anspruch 7, dadurch gekennzeichnet,
daß die Funktionskontrollvorrichtungen der Anordnung mindestens einen Lagesensor (410-411-412) der Steuerorgane des primären Strömungsmittels umfassen.

9. Vorrichtung nach Ansptruch 7, dadurch gekennzeichnet,
daß die Steuerorgane mindestens einen Sensor (215) für die physikalischen Eigenschaften des sekundären Strömungsmittels, wie die Temperatur, umfassen.

10. Vorrichtung nach Anspruch 7, dadurch gekennzeichnet,
daß der Mikroprozessor (400) mindestens einen Empfänger für durch Fernsteuermittel gesendete Steuersignale umfaßt.

11. Vorrichtung nach Anspruch 10, dadurch gekennzeichnet,
daß die Fernsteuerungsmittel mindestens einen Sensor (415-416-417) für Infrarotstrahlen umfassen.

12. Vorrichtung nach Anspruch 1, dadurch gekennzeichnet,
daß die benötigte elekrische Energie mindestens teilweise durch eine in die Ablaufleitung (205) geschaltete Turbine (500) geliefert wird, die mit einem Gleichstromgenerator (506 bis 513) verbunden ist, der über einen Anschluß (516) mit einem Akkumulator (421) verbunden ist.

## Claims

1. A device for distributing a « secondary » fluid resulting from a mixture of at least two « primary » fluids, the device being of the kind comprising a body in two parts separated by a flexible sealing-tight wall (300), one side of which is connected to « inlet » ducts (203, 204) each for one primary fluid, and an « outlet » duct (205) for the secondary fluid, the ducts (203, 204, 205) all communicating with one another via a mixing chamber (202) and the inlet ducts (203, 204) each comprising a means (210, 211) for monitoring the flow rate of the fluid which they contain, the means being situated on the other side of the flexible sealing-tight wall (300) and controlled by driving means comprising individual cams, each monitoring means comprising the flexible sealing-tight wall (300) and, on the one hand, an individually movable component (102 - 103 and 104 - 105) situated on one side of the flexible sealing-tight wall (300) in line with the ends of each inlet duct (203, 204) situated on the other side of the flexible sealing-tight wall (300) and, on the other hand, one individual cam (121, 122) for each moving component (102 - 103 and 104 - 105), said cams being kinematically connected to drive means (116 - 117 - 118) which are always in contact with the moving components (102 - 103 and 104 - 105) either directly or via interposed elements (110, 111) and are kinematically connected to one another so that any motion imparted to one (121, 122) by the drive means (116 - 117 - 118) corresponds to simultaneous motion by the other (122, 121), characterised in that said individual cams (121, 122) are keyed to a common shaft and have a bearing surface which is continuous and the distance of which measured from the circumference of the circumscribed circle varies continuously over at least a part of the cam periphery so as to obtain stable intermediate positions between the two extreme positions of complete opening and complete closing of the said flow-rate monitoring means.

2. A device according to claim 1, characterised in that each moving component comprises a piston (102 - 103, 104 - 105) which engages in a guide cylinder and is disposed opposite a cam (121 - 122) keyed to a shaft (116) kinematically connected to the motor (117).

3. A device according to claim 2, characterised in that the piston is made up of two superposed coaxial parts (102 and 103, 104 and 105) with interposition of a spring (106 - 107)

4. A device according to claim 3, characterised in that one of the two parts (102 - 104) of the piston has a longitudinal prolongation (108 - 109) which slides freely in a correspondingly shaped and dimensioned recess formed in the other part (103 - 105).

5. A device according to claim 2, characterised in that a ball bearing (110 - 111) is mounted for pivoting and fits partly into a semi-circular recess in the piston (102 - 104) so as to be interposed between the piston (102 - 104) and the corresponding cam (121 - 122).

6. A device according to claim 2, characterised in that the shaft (116) kinematically connected to the motor (117) carries at least one ball bearing (113 - 114 - 115) for guidance when pivoting.

7. A device according to claim 1, characterised in that it comprises a microprocessor (400) connected on the one hand to an electric circuit (406 - 407 - 423 - 405) for energising and controlling the motor (117) and on the other hand to means (215, 410 - 411 - 412) for monitoring the operation of the assembly.

8. A device according to claim 7, characterised in that the means for monitoring the operation of the assembly comprise at least one pick-up (410 - 411 - 412) of the position of the means for monitoring the flow rate of the primary fluids.

9. A device according to claim 7, characterised in that the monitoring means comprise at least one pick-up (215) of a physical characteristic of the secondary fluid, such as its temperature.

10. A device according to claim 7, characterised in that the microprocessor (400) comprises at least one receiver for control signals transmitted by remote-control means.

11. A device according to claim 10, characterised in that the remote-control means comprise at least one infra-red radiation pick-up (415 - 416 - 417).

12. A device according to claim 1, characterised in that the necessary electric energy is supplied at least partly by a turbine (500) inserted in the outlet duct (205) and associated with a DC generator (506 to 513) connected to a connection (516) which terminates at a battery (421).
